# EUROPÄISCHE PATENTSCHRIFT

(11) **EP 2 181 789 B1**
(45) Veröffentlichungstag und Bekanntmachung des Hinweises auf die Patenterteilung: **15.06.2011**
(21) Anmeldenummer: 08167925.0
(22) Anmeldetag: 30.10.2008
(51) Int. Cl.: B23F 21/22

(54) **Universal einsetzbarer Stabmesserkopf und Verwendung desselben**
Universally usable bar blade cutter head and use of same
Fraise à tailler universelle et son utilisation

(43) Veröffentlichungstag der Anmeldung: 05.05.2010
(73) Patentinhaber: Klingelnberg AG, 8023 Zürich (CH)
(72) Erfinder: Dürr, Alexander, Saline, MI 48176 (US)
(74) Vertreter: OK pat AG

(56) Entgegenhaltungen:
- EP-A- 1 052 049
- US-A- 2 107 460
- US-A- 2 346 807

## Beschreibung

Die vorliegende Erfindung betrifft Stabmesserköpfe zum Verzahnen von Kegelrädern, insbesondere von bogenverzahnten Kegelrädern im Einzelteilverfahren. Die Erfindung betrifft auch die Verwendung eines solchen universell einsetzbaren Messerkopfs zum Verzahnen bogenverzahnter Kegelräder im Einzelteilverfahren.

### Stand der Technik

Es gibt verschiedene Typen von Kegelrädern, wobei man diese Typen unter anderem anhand des Verlaufs der Flankenlängslinien unterscheidet. Nach dem Verlauf der Flankenlängslinien werden folgende Kegelräder unterschieden:
- geradverzahnte Kegelräder
- schrägverzahnte Kegelräder
- spiralverzahnte Kegelräder.

Der Begriff "spiralverzahnte Kegelräder" wurde vermutlich aus dem amerikanischen Raum übernommen, wo diese Kegelräder generell als "spiral bevel gears" bezeichnet werden. Besser wäre es hier, den Begriff "bogenverzahnte Kegelräder" statt "spiralverzahnte Kegelräder" zu verwenden, da die Spirale bereits eine Spezialform eines Bogens darstellt. Im Folgenden wird weiterhin die Bezeichnung "spiralverzahnte Kegelräder" verwendet. Kegelräder mit Achsversatz werden auch als Hypoidräder bezeichnet. Wenn im Folgenden von Kegelrädern gesprochen wird, so sind solche ohne und mit Achsversatz gemeint.

Bei spiralverzahnten Kegelrädern ist eine weitere Unterteilung im Hinblick auf die Form der Flankenlängslinie möglich:
- Kreisbogen
- verlängerte Epizykloide
- Evolvente
- verlängerte Hypozykloide.

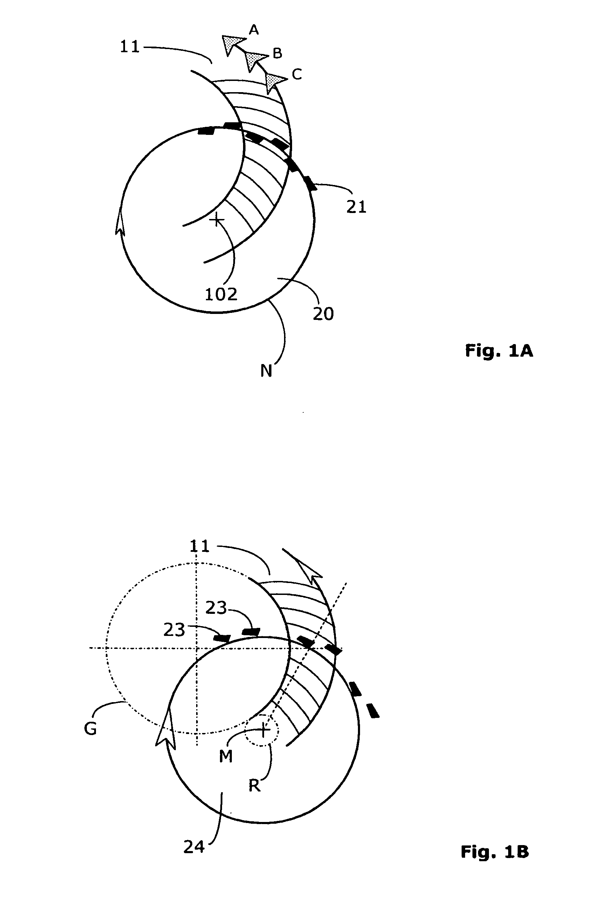

Kreisbogen-verzahnte Kegelräder haben einen Kreisbogen als Flankenlängslinie. Kreisbogen-verzahnte Kegelräder werden im Einzelteilverfahren (auch intermittierendes Teilverfahren, intermitted indexing process, single indexing process oder face milling genannt) gefertigt. Das Einzelteilverfahren ist in Fig. 1A schematisch dargestellt. Die Stabmesser 21 eines Stabmesserkopfs 20 vollziehen eine kreisbogenförmige Bewegung während das zu erzeugende Kegelrad 11 in einer festen Winkelposition ruht. Zum Fertigen weiterer Zahnlücken wird der Stabmesserkopf 20 zurück gezogen und das Werkstück 11 um einen Teilungswinkel gedreht. Das schrittweise Weiterdrehen (hier im Gegenuhrzeigersinn) ist in Fig. 1A durch die Pfelle A, B und C angedeutet. Es wird somit immer eine Zahnlücke auf einmal gefertigt. Die Stabmesser 21 sitzen alle entlang des Nennkreises N.

Erweitert-epizykloidisch (auch verlängert-epizykloidisch genannt) verzahnte Kegelräder werden durch ein kontinuierliches Teilverfahren (auch kontinuierliches Wälzfräsen, continuous indexing process, oder face hobbing genannt) gefertigt. Bei der Erzeugung der Epizykloide im kontinuierlichen Tellverfahren entspricht das Verhältnis von Zähnezahl zu Gangzahl des Stabmesserkopfes (Anzahl der Messergruppen) dem Verhältnis vom Radius des Grundkreises G und dem Radius des Rollkreises R. Man spricht von einer verlängerten Epizykloide, wenn der Messerkopfnennradius, auf dem die Schneiden der Messer sitzen, größer als der Radius des Rollkreises R ist. Bei diesem kontinuierlichen Teilverfahren drehen sich sowohl der Messerkopf 24 als auch das Werkstück 11 in einem zeitlich aufeinander abgestimmten Bewegungsablauf. Die Teilung erfolgt also kontinuierlich und alle Lücken werden quasi gleichzeitig erzeugt. Ein entsprechendes Beispiel ist in Fig. 1B dargestellt. Der Messerkopf 24 dreht sich hier im Uhrzeigersinn, während sich das Werkstück 11 im Gegenuhrzeigersinn dreht. In Fig. 1B ist zu erkennen, dass die Stabmesser 23 eines entsprechenden Stabmesserkopfes 24 typischerweise paarweise (gruppenweise) angeordnet sind. Die Anordnung der Stabmesser 23 ist nicht konzentrisch entlang des Nennkreises N, wie beim Stabmesserkopf 20. In Fig. 1B ist zu erkennen, dass der Rollkreis R des Messerkopfes 24 entlang den Grundkreises G des Werkstücks 11 abrollt. M bezeichnet hier den Mittelpunkt des Messerkopfes 24.

Ein evolventisch-verzahntes Kegelrad weist eine evolventische Flankenlängslinie auf. Ein solches Kegelrad wird auch durch ein kontinuierliches Teilverfahren mittels eines speziellen kegelstumpfförmigen Wälzfräsers gefertigt. Das nach diesem Prinzip arbeitende Verfahren der Firma Klingelnberg heißt Pallold®.

Beispiele von Kegelrädern, die im kontinuierlichen Teilverfahren gefertigt werden, sind die Spiroflex™ und Spirac® Kegelräder der Firma Klingelnberg. Spirac bezeichnet eine Variante des Spiroflex-Verfahrens.

Bei den Messerköpfen, die zur Herstellung von Kegelrädern eingesetzt werden, unterscheidet man zwischen sogenannten Stabmesserköpfen und Formmesserköpfen, Ein Stabmesserkopf wird mit mehreren Stabmessern bestückt, wobei jedes Stabmesser einen Schaft und einen Kopfbereich aufweist. Durch Schleifen des Stabmessers kann diesem die gewünschte Form und Position gegeben werden. Stabmesserköpfe sind gegenüber Formmesserköpfen produktiver und die Stabmesser sind profilierbar. Ein Formmesserkopf ist hingegen mit Formmessern ausgestattet. Die Formmesser behalten beim Nachschleifen ihre Form. Diese Formmesser haben eine andere Form als die Stabmesser und werden nur an der Brust nachgeschliffen. Es ist ein Vorteil des Kegelradfräsens mit Formmessern, dass keine spezielle Schleifmaschine für das Nachschleifen der Formmesser erforderlich ist. Das bekannte Zyklo-Palloid-Verfahren nutzt zum Beispiel derartige Formmesser zum Herstellen von Spiralkegelrädern.

Sowohl bei Stab-, als auch bei Formmesserköpfen werden teilweise sogenannte Unterlegplatten oder Parallelplatten eingesetzt, um die radiale Position eines Stab- oder Formmessers korrigieren zu können. Zu diesem Zweck werden diese Platten in unterschiedlichen Dicken angeboten. Damit kann man typischerweise die Position eines Messer um bis zu 5 mm nach aussen verlagern. Durch die Verwendung solcher Platten wird die Genauigkeit der Position der Messer, die Stabilität der Messerbefestigung und die Steifigkeit der gesamten Anordnung aus Messerkopf und Messer beeinträchtigt.

Es gibt Firmen und Anwender, die eine Reihe von verschiedenen zertifizierten Kegelrädern einsetzen. Häufig ist es daher notwendig, eine grosse Stückzahl an entsprechenden Messerköpfen im Lager zu haben, um nach Bedarf die jeweiligen Kegelräder produzieren zu können. Der Kostenaufwand ist insbesondere dann besonders hoch, wenn ältere Messerköpfe ersetzt werden sollen durch neue Stabmesserköpfe, die neuere und standfestere Stabmesser aufnehmen können, oder die auf neueren Kegelradverzahnrnaschinen einsetzbar sind. Die Kosten können recht hoch sein, wenn alle alten Messerköpfe durch entsprechende neue Stabmesserköpfe ersetzt werden müssen.

Das ARCON®-Messerkopfsystem der Firma Klingelnberg stellt ein beispielhaftes Hochleistungs-Messerkopfsystem für die einzeln teilenden Verzahnverfahren (Einzelteilverfahren) dar. Ein 3,75 inch ARCON®-Messerkopf trägt zum Beispiel 11 Stabmessergruppen mit je einem Innen- und einem Aussenmesser pro Messergruppe. Ein Aussenmesser entfernt Material von der Aussenseite oder konkaven Flanke einer Zahnlücke. Ein Innenmesser entfernt Material von der Innenseite oder konvexen Flanke einer Zahnlücke. Insgesamt werden also in diesem Beispiel 22 Stabmesser eingesetzt. Mit diesem Messerkopf kann zum Beispiel ein Modul 4,5 Kegelrad gefertigt werden. Falls ein Modul 2,5 Kegelrad gebraucht wird, muss man einen anderen 2,5 inch ARCON®-Messerkopf mit insgesamt 14 Stabmessern einsetzen. Analoge Beispiele lassen sich für Messerkopfsysteme anderer Herstelter machen.

In diesem Zusammenhang sollte auch das TwinBlade-System nicht vergessen werden, bei dem ein Messer eine gesamte Zahnlücke erzeugt, wobei diese System nur beim sogenannten Completing-Prozess im Einzelteilen angewendet werden kann.

Diese Beispiele belegen, dass der Werkzeugaufwand für manche Anwender zu gross und teuer sein kann.

Von daher liegt der Erfindung die Aufgabe zugrunde, eine kostengünstige Lösung bereit zu stellen, die es ermöglicht verschiedene spiralverzahnte Kegelräder mit möglichst wenigen Werkzeugen zu fertigen,
Ein Stabmesserkopf sowie dessen Verwendung gemäß dem Oberbegriff der Ansprüche 1 und 8 werden in Dokument US 2107 460 beschrieben.

Die Aufgabe wird erfindungsgemäß durch einen Stabmesserkopf gemäß Patentanspruch 1 gelöst. Vorteilhafte Ausgestaltungen der Erfindung bilden die Gegenstände der abhängigen Patentansprüche. Die Aufgabe wird auch durch einen Verwendungsanspruch nach Anspruch 8 gelöst.

Ein erfindungsgemäßer Stabmesserkopf ist zur Aufnahme mehrerer Stabmesser eines ersten Stabmessersatzes und eines zweiten Stabmessersatzes ausgelegt. Der Stabmesserkopf weist n stirnseitige Aufnahmeöffnungen zur Aufnahme von n Stabmessern des ersten Stabmessersatzes auf. Die n Aufnahmeöffnungen sind allesamt entlang eines ersten konzentrischen Messerkopfnennkreises mit einem ersten Messerkopfnennradius angeordnet, um ein erstes spiralverzahntes Kegelrad unter Einsatz dieser n Stabmesser im Einzelteilverfahren fräsen zu können. Der Stabmesserkopf weist zusätzlich mindestens m Aufnahmeöffnungen zur Aufnahme von m Stabmessern des zweiten Stabmessersatzes auf, die allesamt entlang eines zweiten konzentrischen Messerkopfnennkreises mit einem zweiten Messerkopfnennradius angeordnet sind. Wenn der Stabmesserkopf mit den m Stabmessern des zweiten Stabmessersatzes bestückt ist, dann kann ein zweites bogenverzahntes Kegelrad im Einzelteilverfahren gefräst werden. n und m sind ganze Zahlen größer gleich zwei und der zweite Messerkopfnennradius ist größer als der erste Messerkopfnennradius.

Eine erfindungsgemäße Verwendung eines solchen Stabmesserkopfs sieht vor, dass dieser Stabmesserkopf zum Fertigen von spiralverzahnten Kegelrädern mit unterschiedlicher Verzahnungsgeometrie eingesetzt wird. Um unterschiedliche Verzahnungsgeometrien erzeugen zu können, braucht es Stabmesserköpfe mit unterschiedlichen Messerkopfnennradien. Der Messerkopfnennradius hat nämlich einen großen Einfluß auf die Verzahnungsgeometrie und die erforderlichen Maschineneinstellungen. Der Stabmesserkopf umfasst n Aufnahmeöffnungen zur Aufnahme von n Stabmessern eines ersten Stabmessersatzes, die allesamt entlang eines ersten konzentrischen Messerkopfnennkreises mit einem ersten Messerkopfnennradius angeordnet sind, um ein erstes bogenverzahntes Kegelrad unter Einsatz dieser n Stabmesser im Einzelteilverfahren fräsen zu können. Außerdem umfasst der Stabmesserkopf zusätzlich mindestens m Aufnahmeöffnungen zur Aufnahme von m Stabmessern eines zweiten Stabmessersatzes, die allesamt entlang eines zweiten konzentrischen Messerkopfnennkreises mit einem zweiten Messerkopfnennradius angeordnet sind, um ein zweites bogenverzahntes Kegelrad unter Einsatz nur dieser m Stabmesser im Einzelteilverfahren fräsen zu können. n und m sind ganze Zahlen größer gleich zwei und der zweite Messerkopfnennradius ist größer als der erste Messerkopfnennradius.

Vorteilhafte Ausgestaltungen der Erfindung sind den jeweiligen Unteransprüchen zu entnehmen.

Im Folgenden sind einige Vorteile der Erfindung aufgeführt. Der erfindungsgemäße Messerkopf ist flexibel einsetzbar und behält trotzdem die hohe Genauigkeit eines konventionellen Stabmesserkopfs. Die hohe Genauigkeit wird dadurch erreicht, dass es bei den verschiedenen Messerkopfnennradien hochpräzise Ausnehmungen zur Aufnahme der Stabmesser gibt. Jede Ausnehmung kann zum Beispiel mittels Elektroerosion genau an der gewünschten Position angelegt werden. Die Ausnehmungen sind dabei jeweils nur so groß, wie sie sein müssen, um ein Stabmesser aufzunehmen. Dadurch, dass nur relativ kleine Ausnehmungen erforderlich sind, bleibt die Steifigkeit des Messerkopfs im Wesentlichen erhalten. Würde man längere, radial gerichtete Ausnehmungen vorsehen, wäre die Steifigkeit deutlich reduziert.

Bevorzugte erfindungsgemäße Messerköpfe zeichnen sich weiterhin dadurch aus, dass sie im Wesentlichen monolithisch ausgeführt sind.

### ZEICHNUNGEN

Die Figuren werden zusammenhängend und übergreifend beschrieben. Ausführungsbeispiele der Erfindung werden im Folgenden unter Bezugnahme auf die Zeichnungen näher beschrieben. Es zeigen:
- **FIG. 1A**: eine schematische Illustration des Einzelteilverfahrens;
- **FIG. 1B**: eine schematische Illustration des kontinuierlichen Teilverfahrens;
- **FIG. 2**: eine schematische Seitenansicht eines Kegelradritzels;
- **FIG. 3**: eine perspektivische Ansicht einer Kegelradverzahnmaschine;
- **FIG. 4**: eine schematische Draufsicht eines ersten erfindungsgemäßen Messerkopfs;
- **FIG. 5**: eine schematische Draufsicht eines zweiten erfindungsgemäßen Messerkopfs;
- **FIG. 6A**: eine schematische Draufsicht eines dritten erfindungsgemäßen Messerkopfs;
- **FIG. 6B**: eine detaillierte Draufsicht des dritten erfindungsgemäßen Messerkopfs;
- **FIG. 6C**: eine detaillierte Schnittansicht (Schnitt A-A) des dritten erfindungsgemäßen Messerkopfs;
- **FIG. 6D**: eine detaillierte Seitenansicht des dritten erfindungsgemäßen Messerkopfs;
- **FIG. 6E**: eine perspektivische Ansicht des dritten erfindungsgemäßen Messerkopfs.

### Detaillierte Beschreibung

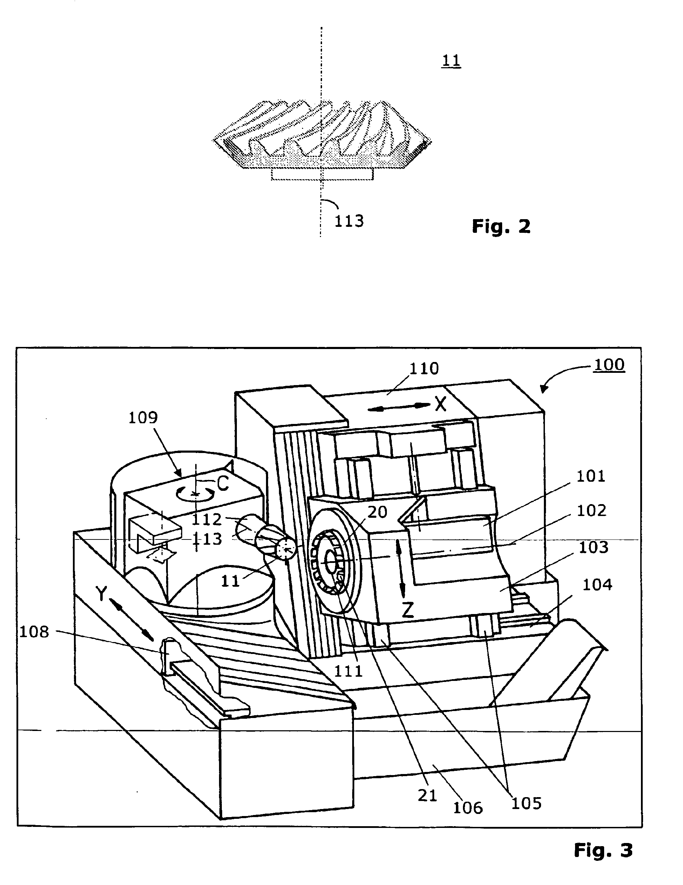

In Fig. 2 ist die schematische Seitenansicht eines spiral-verzahnten Kegelradritzels 11 gezeigt. Es handelt sich um ein Kegelradritzel 11 mit spiralförmiger Flankenlängsline. Die Erfindung lässt sich aber auch auf die Herstellung anderer Kegelradritzel 11 und Tellerräder (z.B. Hypoid-Kegelräder) anwenden, die im Einzelteilverfahren herstellbar sind.

Fig. 3 zeigt in perspektivischer Darstellung den Grundaufbau einer entsprechenden CNC-Maschine 100 (auch Kegelrad-Verzahnmaschine genannt) zum Verzahnen von Kegelrädern 11, vorzugsweise von bogenverzahnten Kegelradritzeln 11 und bogenverzahnten Tellerrädern.

Die CNC-Maschine 100 kann wie folgt aufgebaut sein. Auf einem Maschinenbett 106 ist ein Maschinengehäuse 110 entlang einer geraden Koordinatenachse X (1. Achse) horizontal und linear geführt. Ein erster Schlitten 103 ist auf einer Führung 105, die an einer Seitenfläche des Maschinengehäuses 110 angebracht ist, entlang einer geraden Koordinatenachse Z (2. Achse) mittels eines Spindeltriebs 101 in der Höhe verfahrbar. Auf dem Maschinenbett 104 ist ein Werkstückspindelträger mit einem zweiten Schlitten 108 entlang einer geraden Koordinatenachse Y (3. Achse), die bei der in Fig. 3 gezeigten CNC-Maschine 100 zur X-Achse rechtwinkelig ist, auf einer Führung 107 horizontal und linear geführt. Auf dem Schlitten 108 befindet sich eine erste Schwenkvorrichtung 109 mit vertikaler Achse C (4. Achse). Die Führung 105 des ersten Schlittens 103 und die Z-Achse sind bei der in Fig. 3 gezeigten CNC-Maschine 100 gegen die Vertikale geneigt.

Der erste Schlitten 103 trägt eine um eine Werkzeugspindelachse 102 (5. Achse) drehbar gelagerte Werkzeugspindel 111. Die Werkzeugspindel 111 trägt ein Werkzeug, hier beispielsweise einen Messerkopf 20 mit mehreren Stabmessern 21. Durch den zweiten Schlitten 108 und durch die erste Schwenkvorrichtung 109 ist eine Werkstückspindel 112 auf dem Maschinenbett 106 horizontal geführt und linear verschiebbar bzw. schwenkbar. Die erste Schwenkvorrichtung 109 trägt die Werkstückspindel 112, die um eine Werkstückspindelachse 113 (6. Achse) drehbar ist. Die Werkstückspindel 112 trägt ein Werkstück 11, im vorliegenden Beispiel ein bogenverzahntes Kegelradritzel 11. Die erste Schwenkvorrichtung 109 ist um die C-Achse horizontal geführt schwenkbar, um das Werkstück 11 in eine Bearbeitungsposition zu schwenken. Zum Aufspannen des Werkstücks 11 kann die Werkstückspindel 112 mit einer Spannvorrichtung versehen sein.

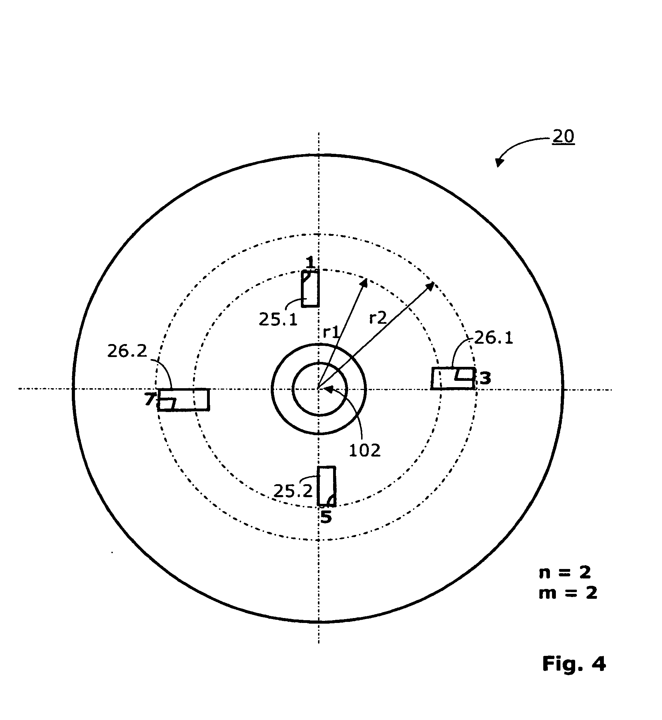

Das Prinzip der Erfindung wird nun anhand der Fig. 4 erläutert. Es ist eine schematische Draufsicht eines Stabmesserkopfs 20 gezeigt, der dazu ausgelegt ist die Stabmesser von zwei verschiedenen Messersätzen aufzunehmen. Für das Aussenmesser des ersten Messersatzes ist an der Position 1 eine Aufnahmeöffnung 25.1 vorgesehen. Die Aufnahmeöffnung 25.2 für das Innenmesser dieses Messersatzes befindet sich an der Position 5. Die beiden Stabmesser (d.h. n=2), respektive die Aufnahmeöffnungen 25.1, 25.2 dieses ersten Messersatzes sitzen auf einem konzentrischen Messerkopfnennkreis mit Messerkopfnennradius r1. Hier ist r1 zum Beispiel 3,75"/2 (= 1,875 inch = 47,63 mm). Die konzentrischen Messerkopfnennkreise haben allen einen gemeinsamen Mittelpunkt, der zusammenfällt mit der Werkzeugspindelachse 102 des Stabmesserkopfs 20. Die beiden Stabmesser dieses Messersatzes bilden eine sogenannte Messergruppe. Ein Stabmessersatz kann mehrere Messergruppen umfassen, wie später erläutert wird.

Der Stabmesserkopf 20 zeichnet sich weiterhin dadurch aus, dass er Aufnahmeöffnungen 26.1, 26.2 für mindestens einen weiteren Messersatz (zweiter Messersatz genannt) mit zwei Stabmessern (d.h. m=2) aufweist. Für das Außenmesser des zweiten Messersatzes ist an der Position 3 eine Aufnahmeöffnung 26.1 vorgesehen. Die Aufnahmeöffnung 26.2 für das Innenmesser dieses zweiten Messersatzes befindet sich an der Position 7. Die beiden Stabmesser, respektive die Aufnahmeöffnungen 26.1, 26.2 dieses zweiten Messersatzes sitzen auf einem konzentrischen Messerkopfnennkreis mit Messerkopfnennradius r2. Hier ist r2 zum Beispiel 5"/2 (= 2,5 inch = 63,5 mm).

Ein solcher Messerkopf 20, der in Fig. 4 gezeigt ist, kann zwei existierende (einen 3,75" und einen 5" Messerkopf) Messerköpfe ersetzen. Wenn der Messerkopf mit den Stabmessern des ersten Messersatzes bestückt ist, kann ein erstes Kegelrad 11 mit einer ersten Verzahnungsgeometrie gefertigt werden. Wenn der Messerkopf mit den Stabmessern des zweiten Messersatzes bestückt ist, kann ein zweites anderes Kegelrad mit einer anderen Verzahnungsgeometrie gefertigt werden.

Die Produktivität eines solchen neuen, universal einsetzbaren Messerkopfs 20 ist jedoch nicht besonders groß, da jeweils nur ein Messersatz mit einer Messergruppe eingesetzt wird.

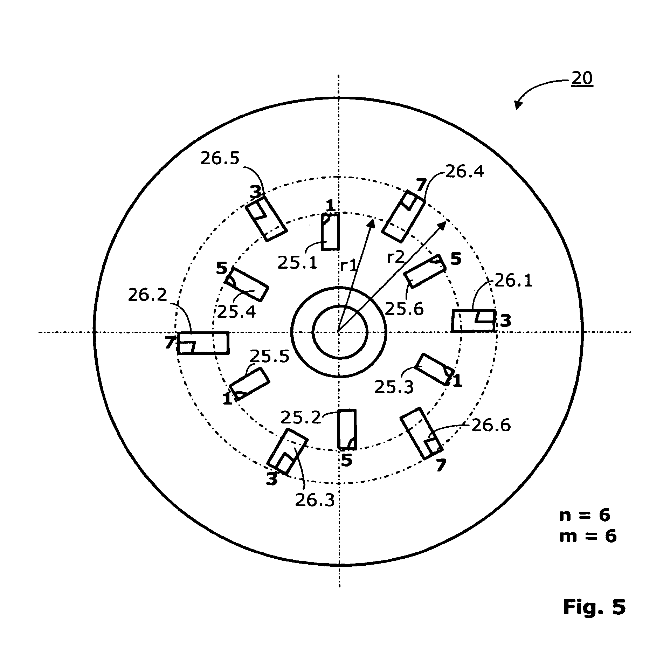

Die Bedeutung der Erfindung wird anhand der folgenden Figuren deutlicher. In Fig. 5 ist das Beispiel einer weiteren Ausführungsform gezeigt. Es handelt sich um einen Stabmesserkopf 20, der n=6 Aufnahmeöffnungen 25.1 - 25.6 für die Stabmesser eines ersten Messersatzes und m=6 Aufnahmeöffnungen 26.1 - 26.6 für die Stabmesser eines zweiten Messersatzes aufweist. Die Außenmesser des ersten Messersatzes werden in den Aufnahmeöffnungen 25.1, 25.3, 25.5 an den Positionen 1 aufgenommen. Die Innenmesser des ersten Messersatzes werden in den Aufnahmeöffnungen 25.2, 25.4, 25.6 an den Positionen 5 aufgenommen. Die Außenmesser des zweiten Messersatzes werden in den Aufnahmeöffnungen 26.1, 26.3, 26.5 an den Positionen 3 aufgenommen. Die Innenmesser des zweiten Messersatzes werden in den Aufnahmeöffnungen 26.2, 26.4, 26.6 an den Positionen 7 aufgenommen. Der erste Messersatz und der zweite Messersatz umfassen je drei Messergruppen aus je einem Innenmesser und Außenmesser.

Dieser Messerkopf hat aufgrund der deutlich höheren Zahl an Messergruppen eine höhere Produktivität als der in Fig. 4 gezeigte Messerkopf 20.

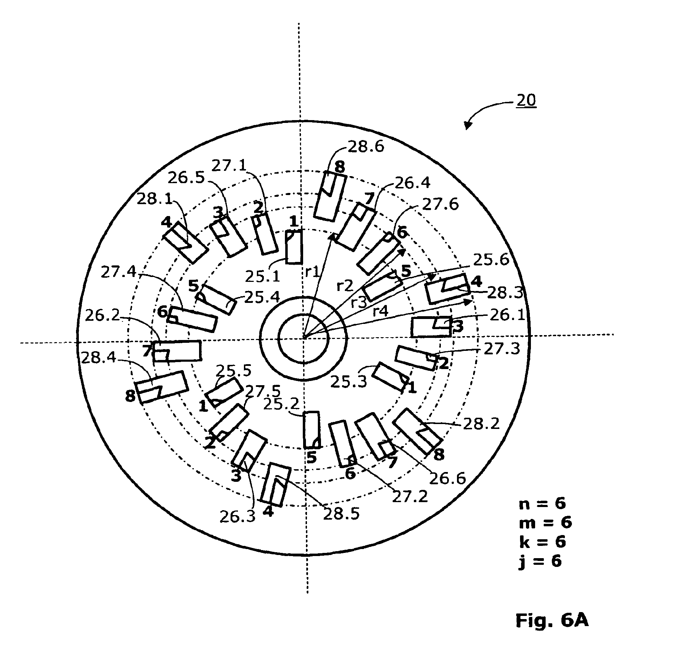

In Fig. 6A ist das Beispiel einer weiteren Ausführungsform in schematischer Form gezeigt. Es handelt sich um einen Stabmesserkopf 20, der n=6 Aufnahmeöffnungen 25.1 - 25.6 für die Stabmesser eines ersten Messersatzes, m=6 Aufnahmeöffnungen 26.1 - 26.6 für die Stabmesser eines zweiten Messersatzes, k=6 Aufnahmeöffnungen 27.1 - 27.6 für die Stabmesser eines dritten Messersatzes und j=6 Aufnahmeöffnungen 28.1 - 28.6 für die Stabmesser eines vierten Messersatzes aufweist.

Die Außenmesser des ersten Messersatzes werden in den Aufnahmeöffnungen 25.1, 25.3, 25.5 an den Positionen 1 aufgenommen. Die Innenmesser des ersten Messersatzes werden in den Aufnahmeöffnungen 25.2, 25.4, 25.6 an den Positionen 5 aufgenommen. Die Außenmesser des zweiten Messersatzes werden in den Aufnahmeöffnungen 26.1, 26.3, 26.5 an den Positionen 3 aufgenommen. Die Innenmesser des zweiten Messersatzes werden in den Aufnahmeöffnungen 26.2, 26.4, 26.6 an den Positionen 7 aufgenommen. Die Außenmesser des dritten Messersatzes werden in den Aufnahmeöffnungen 27.1, 27.3, 27.5 an den Positionen 2 aufgenommen. Die Innenmesser des dritten Messersatzes werden in den Aufnahmeöffnungen 27.2, 27.4, 27.6 an den Positionen 6 aufgenommen. Die Außenmesser des vierten Messersatzes werden in den Aufnahmeöffnungen 28.1, 28.3, 28.5 an den Positionen 4 aufgenommen. Die Innenmesser des vierten Messersatzes werden in den Aufnahmeöffnungen 28.2, 28.4, 28.6 an den Positionen 8 aufgenommen.

Die Messersätze umfassen je drei Messergruppen aus je einem Innenmesser und Außenmesser.

Die Aufnahmeöffnungen 25.1 - 25.6 dieses ersten Messersatzes sitzen auf einem konzentrischen Messerkopfnennkreis mit Messerkopfnennradius r1. Hier ist r1 zum Beispiel 3,75"/2 (= 1,875 inch = 47,63 mm). Die Aufnahmeöffnungen 26.1 - 26.6 des zweiten Messersatzes sitzen auf einem konzentrischen Messerkopfnennkreis mit Messerkopfnennradius r2, mit r2 zum Beispiel gleich 5"/2 (= 2,5 inch = 63,5 mm). Die Aufnahmeöffnungen 27.1 - 27.6 des dritten Messersatzes sitzen auf einem konzentrischen Messerkopfnennkreis mit Messerkopfnennradius r3, mit r3 zum Beispiel gleich 4,375"/2 (= 2,1875 inch = 55,56 mm). Die Aufnahmeöffnungen 28.1 - 28.6 des vierten Messersatzes sitzen auf einem konzentrischen Messerkopfnennkreis mit Messerkopfnennradius r4, mit r4 zum Beispiel gleich 6"/2 (= 3 inch = 76,2 mm).

Ein erfindungsgemäßer Stabmesserkopf 20 ist generell zur Aufnahme von mehreren Stabmessern eines ersten Stabmessersatzes ausgelegt, wobei der Stabmesserkopf 20 n Aufnahmeöffnungen 25.1 - 25.n zur Aufnahme der n Stabmesser des ersten Messersatzes aufweist. Die n Stabmesser des ersten Messersatzes sind allesamt entlang eines ersten konzentrischen Messerkopfnennkreises mit einem ersten Messerkopfnennradius r1 angeordnet. Wenn der Stabmesserkopf 20 mit den n Stabmessern des ersten Messersatzes bestückt ist, dann kann damit ein erstes bogenverzahntes Kegelrad im Einzelteilverfahren gefräst werden. Der Stabmesserkopf 20 weist zusätzlich mindestens m Aufnahmeöffnungen zur Aufnahme von m Stabmessern des zweiten Messersatzes auf. Diese m Stabmesser des zweiten Messersatzes sind allesamt entlang eines zweiten konzentrischen Messerkopfnennkreises mit einem zweiten Messerkopfnennradius r2 angeordnet, um ein zweites bogenverzahntes Kegelrad unter Einsatz nur dieser m Stabmesser im Einzelteilverfahren fräsen zu können. Die genannten Zahlen n und m sind ganze Zahlen größer gleich zwei. Wenn zum Beispiel gilt, dass n gleich sechs ist (siehe Fig. 5), dann haben die Aufnahmeöffnungen 25.1, 25.3, 25.5 zur Aufnahme der drei Innenmesser des ersten Messersatzes einen gegenseitigen Winkelabstand von 120 Grad. Die Aufnahmeöffnungen 25.2, 25.4, 25.6 zur Aufnahme der drei Außenmesser des ersten Messersatzes haben auch einen gegenseitigen Winkelabstand von 120 Grad. Der Winkelabstand zwischen einer Aufnahmeöffnung 25.1 für ein Innenmesser und der nachfolgenden (benachbarten) Aufnahmeöffnung 25.6 für ein Außenmesser beträgt in diesem Beispiel 360 Grad / n, d.h. der Winkel beträgt 60 Grad. Wenn auch m gleich sechs ist, dann gilt diese Aussage in Bezug auf die Winkelangaben analog auch für die Aufnahmeöffnungen 26.1 - 26.6. Die drei Innenmesser des zweiten Messersatzes haben einen gegenseitigen Winkelabstand von 120 Grad und die drei Außenmesser des zweiten Messersatzes haben auch einen gegenseitigen Winkelabstand von 120 Grad.

Wenn z.B. n=6 Stabmesser zum Einsatz kommen, dann können drei dieser Stabmesser Innenmesser und drei Außenmesser sein. In diesem Fall kommen drei Messergruppen mit je einem Innen- und einem Außenmesser als erster Messersatz zum Einsatz.

Es können aber auch zwei Innenmesser, zwei Außenmesser und zwei Vorschneider zum Schneiden des Zahnlückengrundes eingesetzt werden. In diesem Fall umfasst jeder Messersatz ein Innenmesser, ein Außenmesser und einen Vorschneider. Es können aber auch zwei Innenmesser als Fertigschneider, zwei Außenmesser als Fertigschneider und zwei Vorschneider als Schruppmesser sein. In diesem Fall umfasst jeder Messersatz ein Innenmesser, ein Außenmesser und einen Fertigschneider.

Diese Arten der Messeraufteilung in verschiedene Messergruppen kann auf alle Ausführungsformen der Erfindung Anwendung finden.

Die Aufnahmeöffnungen 26.1 - 26.6 zur Aufnahme der m=6 Stabmesser des zweiten Messersatzes sind gegenüber den Aufnahmeöffnungen 25.1- 25.6 zur Aufnahme der n=6 Stabmesser des ersten Messersatzes um mindestens 15 Grad winkelverschoben angeordnet. In Fig. 5 z.B. beträgt der Winkelabstand zwischen der Aufnahmeöffnung 25.1 für das Außenmesser (Position 1) des ersten Messersatzes und der Aufnahmeöffnung 26.1 für das Außenmesser (Position 3) des zweiten Messersatzes 90 Grad. Der Winkelabstand zwischen der Aufnahmeöffnung 25.1 für das Außenmesser (Position 1) des ersten Messersatzes und der Aufnahmeöffnung 26.4 für das Innenmesser (Position 7) des zweiten Messersatzes beträgt 30 Grad.

Vorzugsweise ist der Messerkopf 20 in 15-Grad Winkelmasse unterteilt, um die verschiedenen Aufnahmeöffnungen gegeneinander versetzt anzuordnen.

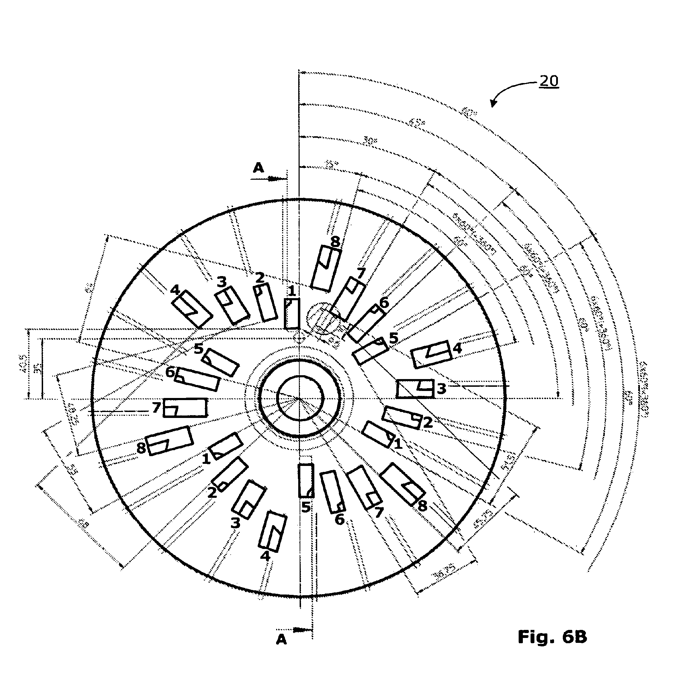

In Fig. 6B sind die gesamten Bemaßungen eines beispielhaften Messerkopfs 20 gezeigt, der insgesamt vier Messersätze mit je sechs Stabmessern (in drei Messergruppen unterteilt) aufnehmen kann. Es sind sowohl die einzelnen Winkel angegeben, als auch die Radien (in Millimetern) vom Mittelpunkt (Achse 102) zum jeweils nächstliegenden Punkt der verschiedenen Aufnahmeöffnungen.

Vorzugsweise sind die erfindungsgemäßen Messerköpfe mit radial verlaufenden Schrauben versehen, um die einzelnen Stabmesser in den entsprechenden Aufnahmeöffnungen fixieren zu können. Diese Schrauben sitzen in radial verlaufenden Befestigungsbohrungen mit Innengewinde. Die Position der einzelnen Befestigungsbohrungen mit Innengewinde ist in Fig. 6B durch Doppellinien angedeutet, die sich vom äußerem Umfang des Messerkopfs 20 radial nach innen zu den Aufnahmeöffnungen hin erstrecken. Vorzugsweise werden zwei Klemmschrauben pro Stabmesser eingesetzt. Diese beiden Klemmschrauben sitzen in axialer Richtung (schräg) hintereinander. Die Klemmschrauben pressen gegen die Stabmesser und sorgen für eine kraftschlüssige Befestigung derselben.

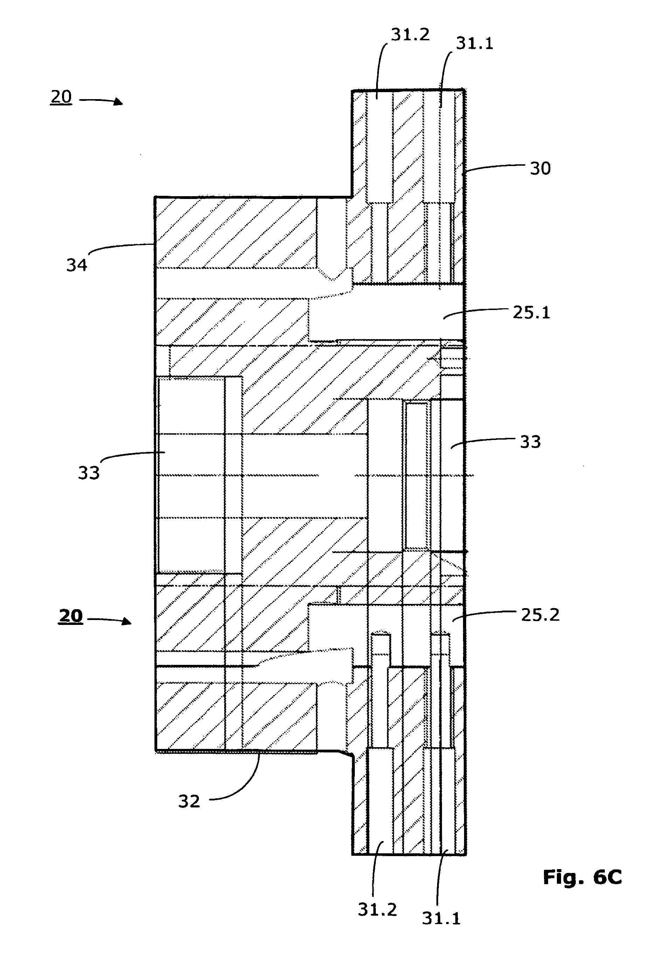

In Fig. 6C ist ein Schnitt entlang der Linie A-A der Fig. 6B gezeigt. Im oberen Bereich von Fig. 6C sind die beiden Befestigungsbohrungen 31.1, 31.2 gezeigt, die zu der Aufnahmeöffnung 25.1 (an Position 1) gehören. Die beiden Befestigungsbohrungen 31.1, 31.2 im unteren Bereich von Fig. 6B sind der Aufnahmeöffnung 25.2 (an Position 5) zugeordnet.

Der Messerkopf 20 hat, wie üblich, eine im Wesentlichen zylindersymmetrische Grundform mit einem tellerförmigen Kopfbereich 30 und einem zylinderförmigen Rückbereich 32. Mittig ist eine Zentralbohrung 33 vorhanden, um den Messerkopf 20 auf einer Werkzeugspindel (z.B. an einem Spindeltrieb 101 in Fig. 2) befestigen zu können.

Die Aufnahmeöffnungen sind vorzugsweise so ausgeführt, dass sie sich schräg durch den Messerkopf 20 hindurch erstrecken. Damit sind die Aufnahmeöffnungen sowohl auf der Vorderseite des Kopfbereichs 30 als auch auf der Rückseite 34 sichtbar.

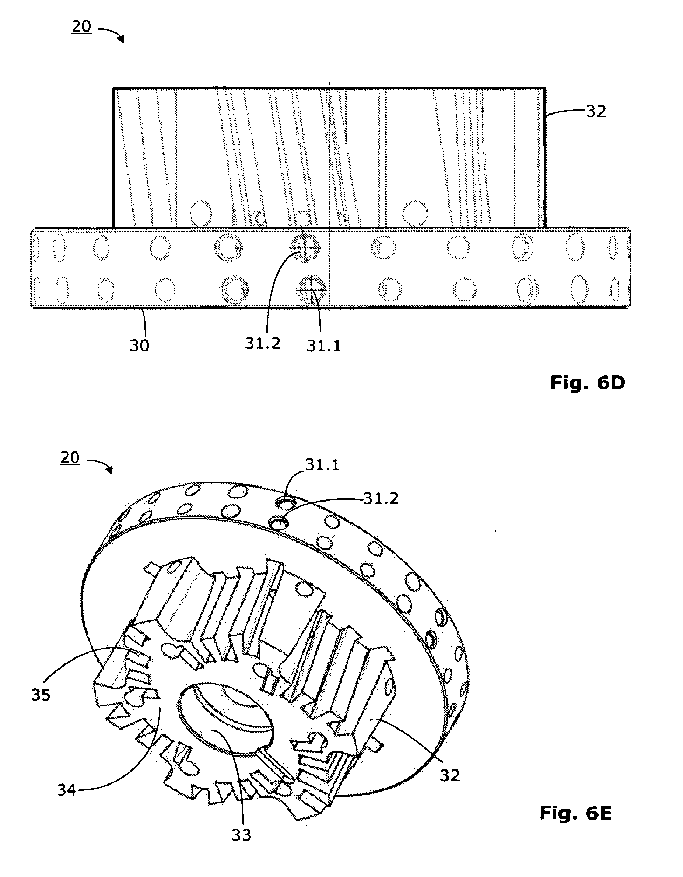

In Fig. 6D ist der schräge Verlauf dieser Aufnahmeöffnungen andeutungsweise zu erkennen. Die Befestigungsbohrungen 31.1, 31.2 für die Klemmschrauben sind entsprechend leicht schräg in axialer Richtung übereinander angeordnet.

In Fig. 4E ist zu erkennen, dass sich durch die Schrägstellung der Stabmesser eine zerklüftete Rückseite 32 des Messerkopfs 20 ergibt. Es sind auf der Rückseite die einzelnen schlitzförmigen Fortsätze der Aufnahmeöffnungen zu erkennen. In Fig. 6E ist ein solcher Schlitz mit dem Bezugzeichen 35 gekennzeichnet.

Bei dem erfindungsgemäßen Messerkopf 20 dienen vorzugsweise präzise gefertigte Schlitze als Aufnahmeöffnungen für die exakte radiale und winkelmäßige Festlegung der Positionen der Stabmesser. Die Aufnahmeöffnungen bilden sogenannte Messerkammern für die exakte radiale und winkelmäßige Festlegung der Positionen und für das Befestigen der Stabmesser z.B. mittels Klemmschrauben.

Vorzugsweise können Distanzplatten in die Messerkammern eingelegt werden, um die Stabmesser radial in den jeweiligen Aufnahmeöffnungen in kleinen Schritten (der Dicke der Distanzplatten entsprechend) verschieben zu können. Dieser Ansatz mit den Distanzplatten, die auch als Parallelplatten bezeichnet werden, ist hinlänglich bekannt und fand schon bei älteren Messerköpfen Anwendung.

Es können zum Positionieren und Befestigen der Stabmesser auch Klemmkeile eingesetzt werden, die vorzugsweise schräg zur Axialrichtung des Messerkopfs 20 in die Aufnahmeöffnungen eingeführt werden.

Die Stabmesser haben typischerweise einen Messerschaft mit einem rechteckigen oder prismatischen Querschnitt. Die Aufnahmeöffnungen des Messerkopfs 20 haben daher einen entsprechenden Querschnitt, der vorzugsweise komplementär ist. Die Messerschäfte können aber auch eine konkave oder konvexe Fläche aufweisen. In diesem Fall ist vorzugsweise auch die Form der Aufnahmeöffnungen entsprechend angepasst.

Der Außendurchmesser des erfindungsgemäßen Messerkopfs 20 ergibt sich aus dem größten Messerkopfnenndurchmesser, der auf dem Messerkopf 20 unterzubringen ist. Wenn der größte Messerkopfnenndurchmesser zum Beispiel 7,5" (7,5 inch = 190,5 mm) beträgt, dann ist der Außendurchmesser vorzugsweise ca. 268 mm. Wenn der größte Messerkopfnenndurchmesser zum Beispiel 3,75" (3,75 inch = 95.25 mm) beträgt, dann ist der Außendurchmesser vorzugsweise ca. 165 mm.

Bei der vorliegenden Erfindung geht es um universal einsetzbare Messerköpfe 20 zur Anwendung in Einzelteilverfahren (nach dem Prinzip von Fig. 1A). Die Stabmesser 21 eines solchen Stabmesserkopfs 20 vollziehen eine spiralförmige Bewegung während das zu erzeugende Kegelrad 11 in einer festen Winkelposition ruht. In einem Fräsdurchgang wird eine Zahnlücke so lange bearbeitet, bis die Endgeometrie hergestellt ist. Zum Fertigen weiterer Zahnlücken wird der Stabmesserkopf 20 zurück gezogen und das Werkstück 11 um einen Teilungswinkel gedreht. Es wird somit immer eine Zahnlücke auf einmal gefertigt.

In einer besonders bevorzugten Ausführungsform können die Aufnahmeöffnungen (Schlitze) von der Geometrie identisch mit denen eines konventionellen Messerkopfs sein. Diese Ausführungsform hat den Vorteil, dass bei gleichem Messerkopfnennradius für die gleiche Kegelradverzahnung die Stabmesser zwischen dem konventionellen und dem erfindungsgemäßen Universal-Messerkopf 24 ausgetauscht werden können. Der erfindungsgemäße Messerkopf 24 nimmt jedoch weniger Stabmesser auf als der konventionelle Messerkopf. Diese Ausführungsform hat den Vorteil, dass die Berechnung, Datenhaltung aber auch Lagerhaltung und Handling bedeutend vereinfacht wird.

Die Erfindung lässt sich insbesondere auf das sogenannte Completing-Verfahren (zum Beispiel im TwinBlade-System) und das Semi-Completing-Verfahren anwenden. Beim Completing-Verfahren handelt es sich um ein in der Großserie eingesetztes Einzelteilverfahren. Das Completing-Verfahren ist gegenüber anderen Einzelteilverfahren durch eine höhere Produktivität gekennzeichnet.

Die Erfindung lässt sich selbstverständlich auf mehr als 4 Nennradien-Messergruppen anwenden, solange durch die Anzahl der Ausnehmungen im Messerkopf dessen Stabilität nicht gefährdet ist.

### Bezugszeichenliste

- Position der Außenmesser:
- der ersten Messergruppe: 1
- Position der Außenmesser:
- der dritten Messergruppe: 2
- Position der Außenmesser:
- der zweiten Messergruppe: 3
- Position der Außenmesser:
- der vierten Messergruppe: 4
- Position der Innenmesser:
- der ersten Messergruppe: 5
- Position der Innenmesser:
- der dritten Messergruppe: 6
- Position der Innenmesser:
- der zweiten Messergruppe: 7
- Position der Innenmesser:
- der vierten Messergruppe: 8
- Kegelradritzel: 11
- Stabmesserkopf: 20
- Stabmesser: 21
- Messerkopf: 24
- Aufnahmeöffnungen für die Stabmesser:
- einer ersten Messergruppe: 25.1 - 25.6
- Aufnahmeöffnungen für die Stabmesser:
- einer zweiten Messergruppe: 26.1 - 26.6
- Aufnahmeöffnungen für die Stabmesser:
- einer dritten Messergruppe: 27.1 - 27.6
- Aufnahmeöffnungen für die Stabmesser:
- einer vierten Messergruppe: 28.1 - 28.6
- Tellerförmiger Kopfbereich: 30
- Schraubenöffnungen für Klemmschrauben: 31.1, 31.2
- Zylindrische Rückbereich: 32
- Zentralbohrung: 33
- Rückseite: 34
- Schlitz: 35
- CNC-Maschine: 100
- Spindeltrieb: 101
- Werkzeugspindelachse: 102
- erster Schlitten: 103
- Maschinenbett: 104
- Führung: 105
- Maschinenbett: 106
- zweiter Schlitten: 108
- Schwenkvorrichtung: 109
- Maschinengehäuse: 110
- Werkzeugspindel: 111
- Werkstückspindel: 112
- Werkstückspindelachse: 113
- Anzahl der Stabmesser der ersten:
- Messergruppe: n
- Anzahl der Stabmesser der zweiten M:
- essergruppe: m
- Anzahl der Stabmesser der dritten:
- Messergruppe: k
- Anzahl der Stabmesser der vierten:
- Messergruppe: j
- 1. Teilungsdrehung: A
- 2. Teilungsdrehung: B
- 3. Teilungsdrehung: C
- Grundkreis: G
- Messerkopfmittelpunkt: M
- Rollkreis: R

## Patentansprüche

1. Stabmesserkopf (20) zur stirnseitigen Aufnahme von mehreren Stabmessern eines ersten Stabmessersatzes, wobei der Stabmesserkopf (20) n Aufnahmeöffnungen (25.1 - 25.6) zur Aufnahme von n Stabmessern des ersten Stabmessersatzes aufweist, die allesamt entlang eines ersten konzentrischen Messerkopfnennkreises mit einem ersten Messerkopfnennradius (r1) angeordnet sind, um ein zweistes spiralverzahntes Kegelrad (11) unter Einsatz dieser n Stabmesser im Einzelteilverfahren fräsen zu können,
**dadurch gekennzeichnet, dass**
- der Stabmesserkopf (20) zusätzlich mindestens m Aufnahmeöffnungen (26.1 - 26.6) zur Aufnahme von m Stabmessern eines zweiten Stabmessersatzes aufweist, die allesamt entlang eines zweiten konzentrischen Messerkopfnennkreises mit einem zweiten Messerkopfnennradius (r2) angeordnet sind, um ein zweites spiralverzahntes Kegelrad unter Einsatz nur dieser m Stabmesser im Einzelteiverfahren fräsen zu können, wobei n und m ganze Zahlen größer gleich zwei sind und der zweite Messerkopfnennradius (r2) größer ist als der erste Messerkopfnennradius (r1);
- die Aufnahmeöffnungen (25.1 - 25.6 und 26.1 - 26.6) zur Aufnahme von Stabmessern mit einem gegenseitigen Winkelabstand angeordnet sind.

2. Stabmesserkopf (20) nach Anspruch 1, **dadurch gekennzeichnet, dass** der Stabmesserkopf (20) zusätzlich mindestens k Aufnahmeöffnungen (27.1 - 27.6) zur Aufnahme von k Stabmessern eines dritten Stabmessersatzes aufweist, die allesamt entlang eines dritten konzentrischen Messerkopfnennkreises mit einem dritten Messerkopfnennradius (r3) angeordnet sind, um ein drittes spiralverzahntes Kegelrad unter Einsatz nur dieser k Stabmesser im Einzelteilverfahren fräsen zu können, wobei k eine ganze Zahl größer gleich zwei ist.

3. Stabmesserkopf (20) nach Anspruch 2, **dadurch gekennzeichnet, dass** der Stabmesserkopf (20) zusätzlich mindestens j Aufnahmeöffnungen (28.1 - 28.6) zur Aufnahme von j Stabmessern eines vierten Stabmessersatzes aufweist, die allesamt entlang eines vierten konzentrischen Messerkopfnennkreises mit einem vierten Messerkopfnennradius (r4) angeordnet sind, um ein viertes spiralverzahntes Kegelrad unter Einsatz nur dieser j Stabmesser im Einzelteilverfahren fräsen zu können, wobei j eine ganze Zahl größer gleich zwei ist.

4. Stabmesserkopf (20) nach einem der vorhergehenden Ansprüche, **dadurch gekennzeichnet, dass**
- n gleich sechs ist und dass die Aufnahmeöffnungen (25.1 - 25.6) zur Aufnahme der n=6 Stabmesser des ersten Stabmessersatzes einen gegenseitigen Winkelabstand von 60 Grad haben;
- m gleich sechs ist und dass die Aufnahmeöffnungen (26.1 - 26.6) zur Aufnahme der m=6 Stabmesser des zweiten Stabmessersatzes einen gegenseitigen Winkelabstand von 60 Grad haben, und
wobei die Aufnahmeöffnungen (26.1 - 26.6) zur Aufnahme der m=6 Stabmesser des zweiten Stabmessersatzes gegenüber den Aufnahmeöffnungen (25.1 - 25.6) zur Aufnahme der n=6 Stabmesser des ersten Stabmessersatzes um mindestens 15 Grad winkelverschoben angeordnet sind.

5. Stabmesserkopf (20) nach einem der vorhergehenden Ansprüche 1 bis 3, **dadurch gekennzeichnet, dass**
- n gleich sechs ist und dass die Aufnahmeöffnungen (25.1 - 25.6) zur Aufnahme der n=6 Stabmesser des ersten Stabmessersatzes einen gegenseitigen Winkelabstand von 60 Grad haben, wobei entlang des ersten konzentrischen Messerkopfnennkreises die Aufnahmeöffnungen (25.1 - 25.6) immer abwechselnd zur Aufnahme eines außenschneidenden Stabmessers und eines innenschneidenden Stabmessers ausgelegt sind;
- m gleich sechs ist und dass die Aufnahmeöffnungen (26.1 - 26.6) zur Aufnahme der m=6 Stabmesser des zweiten Stabmessersatzes einen gegenseitigen Winkelabstand von 60 Grad haben, wobei entlang des zweiten konzentrischen Messerkopfnennkreises die Aufnahmeöffnungen (26.1 - 26.6) immer abwechselnd zur Aufnahme eines außenschneidenden Stabmessers und eines innenschneidenden Stabmessers ausgelegt sind, und
wobei die Aufnahmeöffnungen (26.1 - 26.6) zur Aufnahme der m=6 Stabmesser des zweiten Stabmessersatzes gegenüber den Aufnahmeöffnungen (25.1 - 25.6) zur Aufnahme der n=6 Stabmesser des ersten Stabmessersatzes um mindestens 15 Grad winkelverschoben angeordnet sind.

6. Stabmesserkopf (20) nach Anspruch 5 in Kombination mit Anspruch 2,
**dadurch gekennzeichnet, dass**
- k gleich sechs ist und dass die Aufnahmeöffnungen (27.1 - 27.6) zur Aufnahme der k=6 Stabmesser des dritten Stabmessersatzes einen gegenseitigen Winkelabstand von 60 Grad haben, wobei entlang des dritten konzentrischen Messerkopfnennkreises die Aufnahmeöffnungen (27.1 - 27.6) immer abwechselnd zur Aufnahme eines außenschneidenden Stabmessers und eines innenschneidenden Stabmessers ausgelegt sind.

7. Stabmesserkopf (20) nach Anspruch 5 in Kombination mit Anspruch 3,
**dadurch gekennzeichnet, dass**
- j gleich sechs ist und dass die Aufnahmeöffnungen (28.1 - 28.6) zur Aufnahme der j=6 Stabmesser des vierten Stabmessersatzes einen gegenseitigen Winkelabstand von 60 Grad haben, wobei entlang des vierten konzentrischen Messerkopfnennkreises die Aufnahmeöffnungen (28.1 - 28.6) immer abwechselnd zur Aufnahme eines außenschneidenden Stabmessers und eines innenschneidenden Stabmessers ausgelegt sind.

8. Verwendung eines Stabmesserkopfs (20) zum Fertigen von spiralverzahnten Kegelrädern (11) mit unterschiedlichen Verzahnungsgeometrien, wobei der Stabmesserkopf (20) umfasst:
- n Aufnahmeöffnungen (25.1 - 25.6) zur Aufnahme von n Stabmessern eines ersten Stabmessersatzes, die allesamt entlang eines ersten konzentrischen Messerkopfnennkreises mit einem ersten Messerkopfnennradius (r1) angeordnet sind, um ein erstes spiralverzahntes Kegelrad (11) unter Einsatz dieser n Stabmesser im Einzelteilverfahren fräsen zu können
**dadurch gekennzeichnet, dass**:
- der Stabmesserkopf (20) zusätzlich mindestens m Aufnahmeöffnungen (26.1 - 26.6) zur Aufnahme von m Stabmessern eines zweiten Stabmessersatzes umfasst, die allesamt entlang eines zweiten konzentrischen Messerkopfnennkreises mit einem zweiten Messerkopfnennradius (r2) angeordnet sind, um ein zweites spiralverzahntes Kegelrad unter Einsatz nur dieser m Stabmesser im Einzelteilverfahren fräsen zu können, wobei n und m ganze Zahlen größer gleich zwei sind und der zweite Messerkopfnennradius (r2) größer ist als der erste Messerkopfnennradius (r1);
- die Aufnahmeöffnungen (25.1 - 25.6 und 26.1 - 26.6) zur Aufnahme von Stabmessern mit einem gegenseitigen Winkelabstand angeordnet sind.

9. Verwendung nach Anspruch 8, **dadurch gekennzeichnet, dass** der Stabmesserkopf (20) zusätzlich umfasst:
- mindestens k Aufnahmeöffnungen (27.1 - 27.6) zur Aufnahme von k Stabmessern eines dritten Stabmessersatzes, die allesamt entlang eines dritten konzentrischen Messerkopfnennkreises mit einem dritten Messerkopfnennradius (r3) angeordnet sind, um ein drittes spiralverzahntes Kegelrad unter Einsatz nur dieser k Stabmesser im Einzelteilverfahren fräsen zu können, wobei k eine ganze Zahl größer gleich zwei ist.

10. Verwendung nach Anspruch 8 oder 9, **dadurch gekennzeichnet, dass** das erste spiralverzahnte Kegelrad (11) eine andere Verzahnungsgeometrie hat als das zweite spiralverzahnte Kegelrad, und/oder als das dritte spiralverzahnte Kegelrad.

## Claims

1. Bar-cutter head (20) for face-sided reception of plural bar-cutters of a first set of bar-cutters, wherein the bar-cutter head (20) comprises n reception openings (25.1 - 25.6) for the reception of n bar-cutters of the first set of bar-cutters, which are all arranged along a first concentric bar-cutter nominal circle having a first cutter head nominal radius (r1), so as to be capable to mill a first spiral bevel gear (11) by using these n bar-cutters in an intermitted indexing process, **characterized in that**
- the bar-cutter head (20) further comprises at least m reception openings (26.1 - 26.6) for the reception of m bar-cutters of a second set of bar-cutters, which are all arranged along a second concentric bar-cutter nominal circle having a second cutter head nominal radius (r2), so as to be capable to mill a second spiral bevel gear (11) by a use of only said m bar-cutters in the intermitted indexing process,
wherein n and m are integers greater than or equal to two and the second cutter head nominal radius (r2) is greater than the first cutter head nominal radius (r1);
- the reception openings (25.1 - 25.6 and 26.1 - 26.6) for the reception of bar-cutters are arranged at a mutual angular distance.

2. Bar-cutter head (20) according to claim 1, **characterized in that** the bar-cutter head (20) further comprises at least k reception openings (27.1 - 27.6) for the reception of k bar-cutters of a third set of bar-cutters, which are all arranged along a third concentric bar-cutter nominal circle having a third cutter head nominal radius (r3), so as to be capable to mill a third spiral bevel gear by using only said k bar-cutters in the intermitted indexing process, wherein k is an integer greater than or equal to two.

3. Bar-cutter head (20) according to claim 2, **characterized in that** the bar-cutter head (20) further comprises at least j reception openings (28.1 - 28.6) for the reception of j bar-cutters of a fourth set of bar-cutters, which are all arranged along a fourth concentric bar-cutter nominal circle having a fourth cutter head nominal radius (r4), so as to be capable to mill a fourth spiral bevel gear by using only said j bar-cutters in the intermitted indexing process, wherein j is an integer greater than or equal to two.

4. Bar-cutter head (20) according to any one of the preceding claims, **characterized in that**
- n equals six and that the reception openings (25.1 - 25.6) for the reception of said n=6 bar-cutters of the first set of bar-cutters have a mutual angular distance of 60 degrees,
- m equals six and that the reception openings (26.1 - 26.6) for the reception of said m=6 bar-cutters of the second set of bar-cutters have a mutual angular distance of 60 degrees, and
wherein the reception openings (26.1 - 26.6) for the reception of said m=6 bar-cutters of the second set of bar-cutters are arranged angularly staggered by at least 15 degrees with respect to the reception openings (25.1 - 25.6) for the reception of said n=6 bar-cutters of the first set of bar-cutters.

5. Bar-cutter head (20) according to any one of the preceding claims 1 to 3, **characterized in that**
- n equals six and that the reception openings (25.1 - 25.6) for the reception of said n=6 bar-cutters of the first set of bar-cutters have a mutual angular distance of 60 degrees, wherein along the first concentric bar-cutter nominal circle the reception openings (25.1 - 25.6) are all alternatingly designed for the reception of a bar-cutter cutting an outer-side and a bar-cutter cutting an inner-side,
- m equals six and that the reception openings (26.1 - 26.6) for the reception of said m=6 bar-cutters of the second set of bar-cutters have a mutual angular distance of 60 degrees, wherein along the second concentric bar-cutter nominal circle the reception openings (26.1 - 26.6) are all alternatingly designed for the reception of a bar-cutter cutting an outer-side and a bar-cutter cutting an inner-side, and
wherein the reception openings (26.1 - 26.6) for the reception of said m=6 bar-cutters of the second set of bar-cutters are arranged angularly staggered by at least 15 degrees with respect to the reception openings (25.1 - 25.6) for the reception of said n=6 bar-cutters of the first set of bar-cutters.

6. Bar-cutter head (20) according to claim 5 in combination with claim 2, **characterized in that**
- k equals six and that the reception openings (27.1 - 27.6) for the reception of said k=6 bar-cutters of the third set of bar-cutters have a mutual angular distance of 60 degrees, wherein along the third concentric bar-cutter nominal circle the reception openings (27.1 - 27.6) are all alternatingly designed for the reception of a bar-cutter cutting an outer-side and a bar-cutter cutting an inner-side.

7. Bar-cutter head (20) according to claim 5 in combination with claim 3, **characterized in that**
- j equals six and that the reception openings (28.1 - 28.6) for the reception of said j=6 bar-cutters of the third set of bar-cutters have a mutual angular distance of 60 degrees, wherein along the fourth concentric bar-cutter nominal circle the reception openings (28.1 - 28.6) are all alternatingly designed for the reception of a bar-cutter cutting an outer-side and a bar-cutter cutting an inner-side.

8. Use of a bar-cutter head (20) for manufacturing spiral bevel gears (11) having different toothing geometries, wherein the bar-cutter head (20) comprises:
- n reception openings (25.1 - 25.6) for the reception of n bar-cutters of a first set of bar-cutters, which are all arranged along a first concentric bar-cutter nominal circle having a first cutter head nominal radius (r1), so as to be capable to mill a first spiral bevel gear (11) by using said n bar-cutters in an intermitted indexing process,
**characterized in that**
- the bar-cutter head (20) further comprises at least m reception openings (26.1 - 26.6) for the reception of m bar-cutters of a second set of bar-cutters, which are all arranged along a second concentric bar-cutter nominal circle having a second cutter head nominal radius (r2), so as to be capable to mill a second spiral bevel gear (11) by using only said m bar-cutters in the intermitted indexing process, wherein n and m are integers greater than or equal to two and the second cutter head nominal radius (r2) is greater than the first cutter head nominal radius (r1); and
- the reception openings (25.1 - 25.6 and 26.1 - 26.6) for the reception of bar-cutters are arranged at a mutual angular distance.

9. Use according to claim 8, **characterized in that** the bar-cutter head (20) additionally comprises:
- at least k reception openings (27.1 - 27.6) for the reception of k bar-cutters of a third set of bar-cutters, which are all arranged along a third concentric bar-cutter nominal circle having a third cutter head nominal radius (r3), so as to be capable to mill a third spiral bevel gear by using only said k bar-cutters in an intermitted indexing process, wherein k is an integer greater than or equal to two.

10. Use according to claim 8 or 9, **characterized in that** the first spiral bevel gear (11) has a different toothing geometry than the second spiral bevel gear, and/or than the third spiral bevel gear.

## Revendications

1. En-tête de barres à lame (20) pour une réception frontale de plusieurs barres à lame d'un premier jeu de barres à lame, dans lequel l'en-tête de barres à lame (20) comprend n apertures de réception (25.1 - 25.6) pour la réception de n barres à lame du premier jeu de barres à lame, lesquelles sont toutes disposées le long d'un premier cercle nominale concentrique des barres à lame ayant un premier radius (r1) nominale de barres à lame pour être capable à fraiser une première roue conique (11) à denture helicycloide en utilisant lesdites n barres à lame dans une procédure d'indexation intermittente,
**caractérisé en ce que**
- l'en-tête de barres à lame (20) comprend en outre au moins m apertures de réception (26.1 - 26.6) pour la réception de m barres à lame du second jeu de barres à lame, lesquelles sont toutes disposées le long d'un second cercle nominale concentrique des barres à lame concentrique ayant un second radius (r2) nominale de barres à lame pour être capable à fraiser une seconde roue conique à denture helicycloide en n'utilisant que lesdites m barres à lame dans la procédure d'indexation intermittente, dans lequel n et m sont des nombres entiers plus grand que ou égale à deux et le second radius (r2) nominale de barres à lame est plus grand que le premier radius (r1) nominale de barres à lame ; et
- les apertures de réception (25.1 - 25.6 et 26.1 - 26.6) pour la réception des barres à lame sont disposées à une distance angulaire mutuelle.

2. En-tête de barres à lame (20) selon la revendication 1, **caractérisé en ce que** l'en-tête de barres à lame (20) comprend en outre au moins k apertures de réception (27.1 - 27.6) pour la réception de k barres à lame d'un troisième jeu de barres à lame, lesquelles sont toutes disposées le long d'un troisième cercle nominale concentrique des barres à lame concentrique ayant un troisième radius (r3) nominale de barres à lame pour être capable à fraiser une troisième roue conique à denture helicycloide en n'utilisant que lesdites k barres à lame dans la procédure d'indexation intermittente, dans lequel k est un nombre entier plus grand que ou égale à deux.

3. En-tête de barres à lame (20) selon la revendication 2, **caractérisé en ce que** l'en-tête de barres à lame (20) comprend en outre au moins j apertures de réception (28.1 - 28.6) pour la réception de j barres à lame d'un quatrième jeu de barres à lame, lesquelles sont toutes disposées le long d'un quatrième cercle nominale concentrique des barres à lame concentrique ayant un quatrième radius nominale de barres à lame pour être capable à fraiser une quatrième roue conique à denture helicycloide en n'utilisant que lesdites j barres à lame dans la procédure d'indexation intermittente, dans lequel j est un nombre entier plus grand que ou égale à deux.

4. En-tête de barres à lame (20) selon quelques-unes des revendications précédentes, **caractérisé en ce que**
- n est égale à six et ce que les apertures de réception (25.1 - 25.6) pour la réception de n=6 barres à lame du premier jeu de barres à lame ont une distance angulaire mutuelle de 60 degrés ;
- m est égale à six et ce que les apertures de réception (26.1 - 26.6) pour la réception de m=6 barres à lame du second jeu de barres à lame ont une distance angulaire mutuelle de 60 degrés, et
dans lequel les apertures de réception (26.1 - 26.6) pour la réception de m=6 barres à lame du second jeu de barres à lame sont disposées de façon déportées angulairement par au moins 15 degrés relative aux apertures de réception (25.1 - 25.6) pour la réception de n=6 barres à lame du premier jeu de barres à lame.

5. En-tête de barres à lame (20) selon quelques-unes des revendications précédentes 1 à 3, **caractérisé en ce que**
- n est égale à six et ce que les apertures de réception (25.1 - 25.6) pour la réception de n=6 barres à lame du premier jeu de barres à lame ont une distance angulaire mutuelle de 60 degrés ; cependant le long du premier cercle concentrique nominale des barres à lame les apertures de réception (25.1-25.6) sont toujours faites alterner pour la réception d'une barre à lame coupant à l'extérieur et d'une barre à lame coupant à l'intérieur;
- m est égale à six et ce que les apertures de réception (26.1 - 26.6) pour la réception de m=6 barres à lame du second jeu de barres à lame ont une distance angulaire mutuelle de 60 degrés ; cependant le long du second cercle concentrique nominale des barres à lame les apertures de réception (26.1-26.6) sont toujours faites alterner pour la réception d'une barre à lame coupant à l'extérieur et d'une barre à lame coupant à l'intérieur; et
cependant les apertures de réception (26.1-26.6) pour la réception des m=6 barres à lame du second jeu de barres à lame sont disposées de façon déportées angulairement par au moins 15 degrés relative aux apertures de réception (25.1 - 25.6) pour la réception de n=6 barres à lame du premier jeu de barres à lame.

6. En-tête de barres à lame (20) selon la revendication 5 en combinaison avec la revendication 2, **caractérisé en ce que**
- k est égale à six et ce que les apertures de réception (27.1 - 27.6) pour la réception de k=6 barres à lame du troisième jeu de barres à lame ont une distance angulaire mutuelle de 60 degrés ; cependant le long du troisième cercle concentrique nominale des barres à lame les apertures de réception (27.1-27.6) sont toujours faites alterner pour la réception d'une barre à lame coupant à l'extérieur et d'une barre à lame coupant à l'intérieur.

7. En-tête de barres à lame (20) selon la revendication 5 en combinaison avec la revendication 3, **caractérisé en ce que**
- j est égale à six et ce que les apertures de réception (28.1 - 28.6) pour la réception de j=6 barres à lame du quatrième jeu de barres à lame ont une distance angulaire mutuelle de 60 degrés ; cependant le long du quatrième cercle concentrique nominale des barres à lame les apertures de réception (28.1-28.6) sont toujours faites alterner pour la réception d'une barre à lame coupant à l'extérieur et d'une barre à lame coupant à l'intérieur.

8. Utilisation d'un en-tête de barres à lame (20) pour fabriquer des roues coniques (11) à denture helicycloide ayant des géométries de denture différentes, dans laquelle l'en-tête de barres à lame (20) comprend :
- n apertures de réception (25.1 - 25.6) pour la réception de n barres à lame d'un premier jeu de barres à lame, lesquelles sont toutes disposées le long d'un premier cercle nominale concentrique des barres à lame ayant un premier radius (r1) nominale de barres à lame pour être capable à fraiser une première roue conique (11) à denture helicycloide en utilisant lesdites n barres à lame dans une procédure d'indexation intermittente,
**caractérise en ce que** :
- l'en-tête de barres à lame (20) comprend en outre au moins m apertures de réception (26.1 - 26.6) pour la réception de m barres à lame d'un second jeu de barres à lame, lesquelles sont toutes disposées le long d'un second cercle nominale concentrique des barres à lame concentrique ayant un second radius (r2) nominale de barres à lame pour être capable à fraiser une seconde roue conique à denture helicycloide en n'utilisant que lesdites m barres à lame dans la procédure d'indexation intermittente, dans lequel n et m sont des nombres entiers plus grand que ou égale à deux et le second radius (r2) nominale de barres à lame est plus grand que le premier radius (r1) nominale de barres à lame ; et
- les apertures de réception (25.1 - 25.6 et 26.1 - 26.6) pour la réception des barres à lame sont disposées à une distance angulaire mutuelle.

9. Usage selon la revendication 8, **caractérise en ce que** l'en-tête de barres à lame (20) comprend en outre :
- au moins k apertures de réception (27.1 - 27.6) pour la réception de k barres à lame d'un troisième jeu de barres à lame, lesquelles sont toutes disposées le long d'un troisième cercle nominale concentrique des barres à lame concentrique ayant un troisième radius (r3) nominale de barres à lame pour être capable à fraiser une troisième roue conique à denture helicycloide en n'utilisant que lesdites k barres à lame dans la procédure d'indexation intermittente, dans lequel k est un nombre entier plus grand que ou égale à deux.

10. Usage selon la revendication 8 ou 9, **caractérise en ce que** la première roue conique à denture helicycloide a une géométrie à denture différente que la seconde roue conique à denture helicycloide et/ou la troisième roue conique à denture helicycloide.
